# EUROPEAN PATENT APPLICATION

(11) **EP 1 889 774 A1**
(43) Date of publication of application: **20.02.2008**
(21) Application number: 06757119.0
(22) Date of filing: 07.06.2006
(51) Int. Cl.: B62D 5/04, B62D 5/30, B62D 6/00, H02P 6/00

(54) **ELECTRIC POWER STEERING DEVICE**

(30) Priority: 07.06.2005 JP 2005167312
(71) Applicant: JTEKT Corporation, Osaka-shi Osaka 542-8502 (JP)
(72) Inventor: NAGASE, Shigeki c/o JTEKT CORPORATION, Osaka 542-8502 (JP); SAKAMAKI, Masahiko c/o JTEKT CORPORATION, Osaka 542-8502 (JP)
(74) Representative: Hager, Thomas Johannes
(86) International application number: PCT/JP2006/311412
(87) International publication number: WO 2006/132268

(57) **Abstract**

An electric power steering system which includes a torque detector for detecting a steering torque applied to a steering member and a steering assist brushless DC motor, whereby a plurality of phase currents are caused to flow to the brushless DC motor based on the steering torque detected by the torque detector so as to give steering assistance. A current detector for detecting each of the plurality of phase currents, an adder for adding up respective values of the currents detected by the current detectors and a determination device for determining whether or not a result of an addition by the adder falls outside a predetermined range are provided, whereby it is designed to determined as abnormal when the determination device determines that the result of the addition falls outside the predetermined range.

## Description

### Technical Field

The present invention relates to an electric power steering system.

### Background Art

An electric power steering system for decreasing the load on a driver by assisting him or her in steering by driving a motor is such as to include an input shaft which is linked with a steering member (a steering wheel, a steering device), an output shaft which is linked with steering road wheels via a pinion, a rack and the like and a connecting shaft which connects the input shaft with the output shaft, whereby a torque sensor detects a steering torque value inputted into the input shaft by an angle of torsion which is produced in the connecting shaft, so as to control the drive of the steering assist motor which is linked with the output shaft based on the steering torque value so detected.

In an electric power steering system like this, in recent years, a brushless DC motor has come to be used. In the brushless DC motor, currents of a plurality of phases are made to flow to a stator through PWM (Pulse Width Modulation) control so that a rotating magnetic filed is produced according to a rotational position of a rotor.

Furthermore, in order to secure the safety of the driver and the vehicle, a fail-safe technique is adopted which prevents in advance the occurrence of, in particular, the lock of the steering wheel which will result in a serious accident.

The following patent documents are known as describing fail-safe techniques like this.
Patent Document No. 1: JP-A-2001-328549
Patent Document No. 2: JP-A-2001-260920
Patent Document No. 3: JP-A-2001-260919
Patent Document No. 4: JP-A-2000-280927

Patent Document No. 1 discloses a power steering system which enhances reliability and safety by determining whether or not the direction of an assisting steering effort by an induction motor is the same as the direction of the steering effort.
Patent Document No. 2 discloses a power steering system which enhances reliability and safety by determining accurately an output state of a drive signal which is outputted to a steering assist induction motor.
Patent Document No. 3 discloses a power steering system which enhances reliability and safety by determining accurately an output state of torque which is outputted from a steering assist induction motor.
Patent Document No. 4 discloses an electric power steering system in which a degree of change in a control signal for driving an electric motor which complements the steering torque is calculated, and when the degree of change so calculated has reached a predetermined level, a control unit for outputting a control signal is determined to be abnormal.

### Disclosure of the Invention

### Problem that the Invention is to Solve

In the determination method of Patent Document No. 1, however, overcurrent or undercurrent which occurs due to a ground fault or the like cannot be detected as abnormal.
In Patent Document No. 2, since attention is focused on the upper limit of an output current of a motor driving circuit, unless a current of a certain degree or more flows, no abnormal detection can be implemented.
In Patent Document No. 3, since a current which flows constantly due to a ground fault of a neutral point is not calculated as an output torque, no such current can be detected.
In Patent Document No. 4, although a technique is disclosed which prevents an erroneous determination after abnormality has been detected, the technique disclosed has nothing to do with an abnormality detecting means itself.

In an electric power steering system which uses a brushless DC motor for giving steering assistance, in case a failure such as a disconnection, ground fault or the like of a motor current detection circuit or a motor driving circuit occurs, there is caused a problem that the failure results in a serious failure such as the lock of the steering wheel.
The invention was made with a view to solving generally a series of technical problems described above, and an object thereof is to provide an electric power steering system which can detect a failure such as a disconnection, ground fault or the like of the motor current detection circuit or the motor driving circuit.
In addition, another object of the invention is to provide an electric power steering system which is free from a risk that in case a failure such as a disconnection, ground fault or the like of the motor current detection circuit or the motor driving circuit occurs, the failure results in a serious failure such as a locked steering wheel.

### Means for Solving the Problem

With a view to attaining the objects, the invention has the following features.
(1) An electric power steering system including:
   a torque detector for detecting a steering torque applied to a steering member;
   a steering assist brushless DC motor;
   a driving device for driving the motor by causing a plurality of currents to flow based on a steering torque detected by the torque detector;
   a current detector for detecting each of the plurality of phase currents;
   an adder for adding values of the currents detected by the current detector; and
   a determination device for determining whether or not a result of an addition performed by the adder falls within a predetermined range and determining as abnormal when the result of the addition is determined to fall outside the predetermined range.
(2) An electric power steering system as set forth under (1), wherein when determined as abnormal, steering assistance by the motor is made to be stopped.
(3) An electric power steering system as set forth under (1), wherein the predetermined range is determined to be in a range which is centered at 0.

With the electric power steering system according to the invention under (1), since it is configured that each current detector detects each of the plurality of phase currents, the adder adds the individual current values detected by the current detectors, and the determination device determines whether or not the result of the addition falls outside the predetermined range and determines as abnormal when the result of the addition falls outside the predetermined range, an electric power steering system can be realized which can detect a failure such as a disconnection, ground fault or the like of a motor current detection circuit or a motor driving circuit.

With the electric power steering system according to the invention under (2), since the steering assistance by the motor is stopped when determined as abnormal, an electric power steering system can be realized which is free from the risk that in case a failure such as a disconnection, ground fault or the like of the motor current detection circuit or the motor driving circuit occurs, the failure results in a serious failure such as a locked steering wheel.

### Brief Description of the Drawings

Fig. 1 is a block diagram showing the configuration of an embodiment of an electric power steering system according to the invention.
Fig. 2 is a block diagram showing a configuration example of a brushless DC motor, a motor driving circuit and a motor current detection circuit.
Fig. 3 is a flowchart illustrating an operation for detecting abnormality in the motor of the electric power steering system according to the invention.
Fig. 4 is a block diagram showing another configuration example of a brushless DC motor, a motor driving circuit and a motor current detection circuit.

### Best Mode for Carrying out the Invention

Hereinafter, the invention will be described based on drawings which illustrate embodiments thereof.

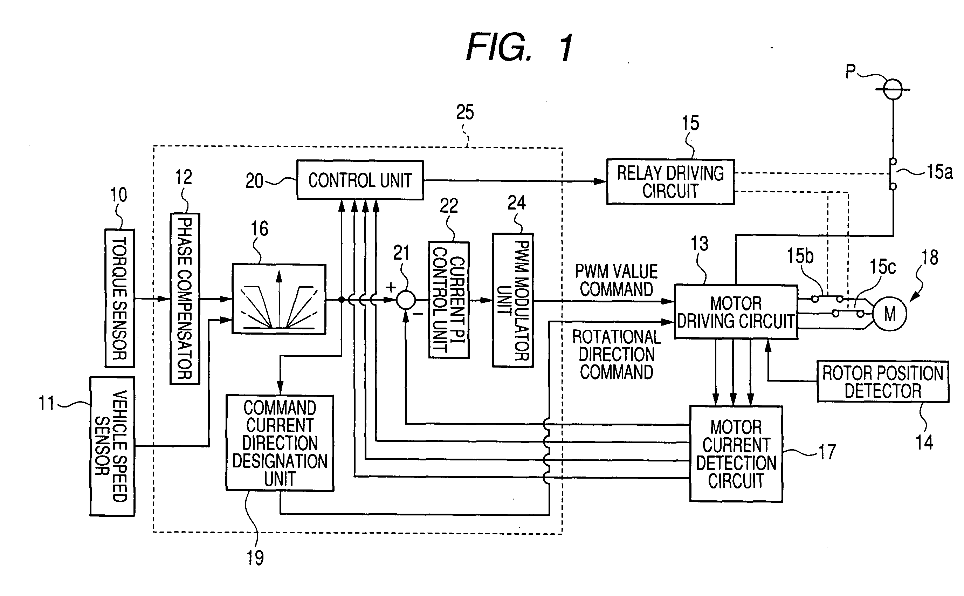

Fig. 1 is a block diagram showing the configuration of an embodiment of an electric power steering system according to the invention. In this electric power steering system, a steering torque applied to a steering member, which is not shown, is detected by a torque sensor (a torque detector) 10, and the value of the steering torque so detected is given to a phase compensator 12. The steering torque value which is compensated for phase at the phase compensator 12 is given to a torque-current table 16 in an ECU (a controller) 25. In addition, a vehicle speed value detected by a vehicle speed sensor 11 is also given to the torque-current table 16.

In the torque-current table, a function is determined to vary according to a vehicle speed value in which when the steering torque value exceeds a predetermined dead band, a target value of a motor current increases proportionally as the steering torque value increases and furthermore, when the steering torque value reaches or exceeds a predetermined value, the target value gets saturated. The function is determined such that a ratio of the target value of motor current to the steering torque value decreases and the saturation value of the target value decreases as the vehicle speed value increases. A current command value of motor current that is determined by the torque-current table 16 is given to a subtracter 21 and a command current direction designation unit 19.

The current command value of motor current is a value with a sign which indicates a target value in a motor control, and positive and negative signs thereof indicates the direction of steering assistance.
The command current direction designation unit 19 prepares a rotational direction command signal which indicates the direction of steering assistance based on the positive or negative sign of a current command value given for motor current and gives it to a motor driving circuit 13.
A motor 18 which is a brushless DC motor for performing steering assistance incorporates therein a rotor position detector 14 for detecting the position of a rotor of the motor, and a rotor position signal outputted by the rotor position detector 14 is given to the motor driving circuit 13.

A motor current detection circuit (a current detector) 17 detects and sums currents which flow to a U-phase field coil and a V-phase field coil, respectively, and gives the sum to a subtracter 21 in the ECU 25. In addition, currents which flow to the U-phase field coil, the V-phase field coil and a W-phase field coil are detected to be given to a control unit 20.
The subtracter 21 calculates a difference between a current command value and the current value which is detected and summed by the motor current detection circuit 17 and gives the difference so calculated to a current PI control unit 22. The current PI control unit 22 calculates a voltage value that is to be impressed to the motor 18 for PI control based on the difference so given and gives it to a PWM modulator unit 24.

The PWM modulator unit 24 pulse width modulates the given voltage value and gives the pulse width modulated voltage value to the motor driving circuit 13 as a PWM value command signal.
The control unit 20 detects the abnormality of the motor 18 by adding up the values of the U-phase, V-phase and W-phase currents which were given thereto and determining whether or not the added value falls outside a predetermined range. In addition, when it detects the abnormality, the control unit 20 switches off a relay driving circuit 15 so as to switch off (open) a relay contact 15a between the motor driving circuit 13 and an on-board battery P, a relay contact 15b between the motor driving circuit 13 and the U-phase field coil and a relay contact 15c between the motor driving circuit 13 and the V-phase field coil.

A sum resulting from the addition of the values of the U-phase, V-phase and W-phase currents is theoretically 0, and the predetermined range which constitutes a base for a determination made on whether or not the added value is normal is determined to be within a range which is centered at 0.
In addition, the torque-current table 16, the subtracter 21, the command current direction designation unit 19, the control unit 20, the current PI control unit 22, and the PWM modulator unit 24 of the ECU 25 are realized by microcomputers.

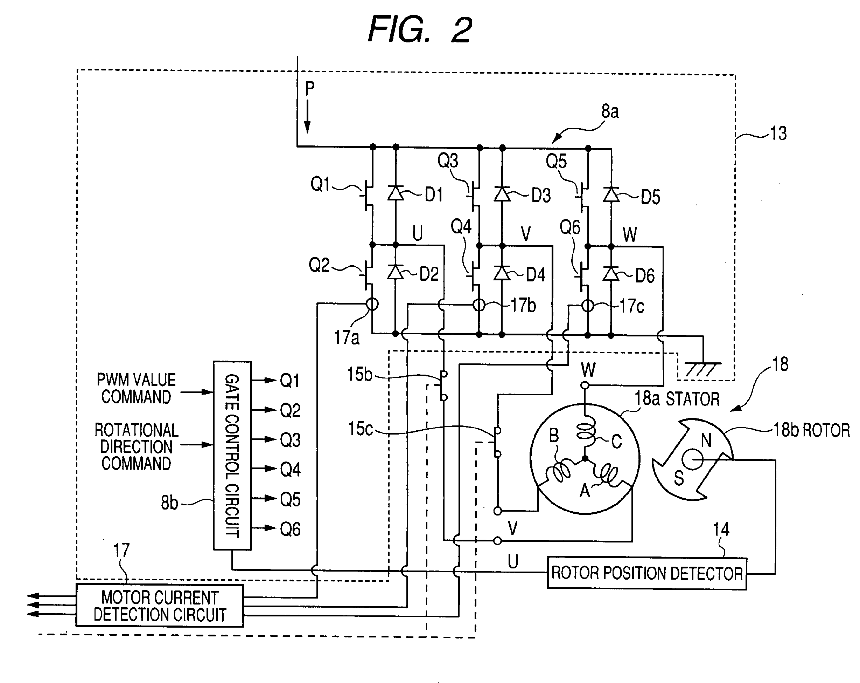

Fig. 2 is a block diagram which shows a configuration example of the brushless DC motor 18, the motor driving circuit 13 and the motor current detection circuit 17. The brushless DC motor 18 includes a stator 18a (a stator) to which coils A, B, C are star connected, a rotor 18b (a rotor) which rotates by virtue of rotational magnetic fields which are generated by the coils A, B, C, and a rotor position detector 14 which detects the rotational position of the rotor 18b.

In the motor driving circuit 13, a supply voltage of the on-board battery P is connected to a positive side terminal of a switching circuit 8a. In the switching circuit 8a, transistors Q1, Q2 which are connected in series and diodes D1, D2 which are connected in series in an opposite direction are connected in parallel between the positive side terminal and a ground terminal. In addition, transistors Q3, Q4 which are connected in series and diodes D3, D4 which are connected in series in an opposite direction are connected in parallel, and transistors Q5, Q6 which are connected in series and diodes D5, D6 which are connected in series in an opposite direction are connected in parallel.
Current sensors 17a, 17b, 17c are mounted between the ground terminal side transistors Q2, Q4, Q6 and the ground terminal, respectively, and respective detection values of the current sensors 17a, 17b, 17c are given to the motor current detection circuit 17 as respective current values of the U-phase, V-phase and W-phase currents.

The other terminal U of the star-connected coil A is connected to a common connection node of the transistors Q1, Q2 and a common connection node of the diodes D1, D2 via the relay contact 15a, and the other terminal V of the star-connected coil B is connected to a common connection node of the transistors Q3, Q4 and a common connection node of the diodes D3, D4 via the relay contact 15c. In addition, the other terminal W of the star-connected coil C is connected to a common connection node of the transistors Q5, Q6 and a common connection node of the diodes D5, D6.

The rotational position of the rotor 18b which is detected by the rotor position detector 14 is informed to a gate control circuit 8b as a rotor position signal. A PWM value command signal and a rotational direction command value are given to the gate control circuit 8b from the PWM modulator unit 24 and the command current direction designation unit 19 of the ECU 25, respectively. The gate control circuit 8b switches on/off respective gates of the transistors Q1 to Q6 in response to the rotational direction command signal and the rotor position signal and changes over paths of current which flows to the stator 18a in such a way as U-V, U-W, V-W, V-U, W-U, W-V, U-V, so as to generate a rotating magnetic field.

The rotor 18b is a permanent magnet and rotates by receiving a rotational force from the rotating magnetic field. The gate control circuit 8b PWM (Pulse Width Modulation) controls the on/off of the transistors Q1 to A6 according to current command values to thereby control the increase and decrease of the rotational torque of the brushless motor 18.
The diodes D1 to D6 are free-wheeling diodes which protect the transistors Q1 to Q6 and maintain current flowing to the stator 18a.

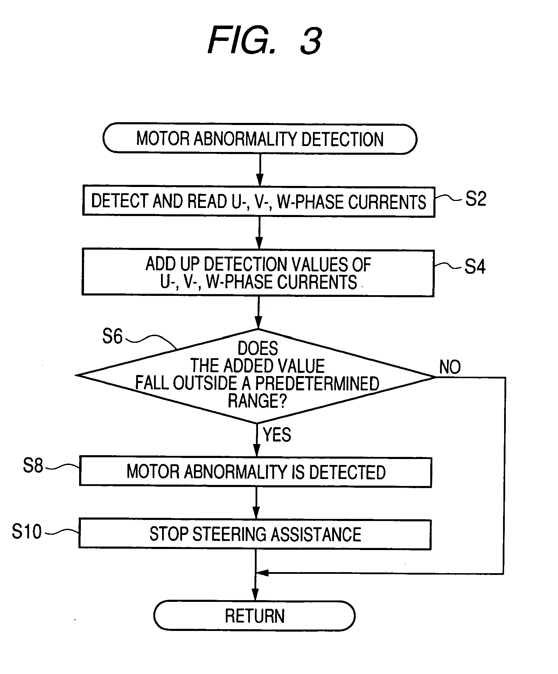

The operation of detecting the abnormality of the motor of the electric power steering system that is configured as has been described heretofore will be described by reference to a flowchart in Fig. 3 which illustrates the operation.
If a disconnection failure or a ground fault failure occurs in the motor driving circuit 13 or the motor current detection circuit 17 which includes the current sensors 17a, 17b, 17c, any of the current values of the U-phase, V-phase and W-phase currents comes to show 0 or a large current value.

The control unit 20 of the ECU 25 firstly reads respective current values of the U-phase, V-phase and W-phase currents from the motor current detection circuit 17 (S2) and adds up the individual current values so read (S4). Following this, the control unit 20 determines whether or not the added value falls outside the predetermined range which is centered at 0, and if it is not outside the predetermined range, the process returns (S6 NO).
If the added value falls outside the predetermined range (S6 YES), determining that the motor abnormality is detected, the control unit 20 switches off the relay driving circuit 15 so as to switch off (open) the relay contacts 15a, 15b, 15c to thereby stop the supply of power supply to the motor driving circuit 13 and opens a closed circuit of the motor 18 to thereby stop the steering assistance (S10), and the process returns. By opening the closed circuit of the motor 18, the generation of counter electromotive force by virtue of the rotation of the rotor 18b is prevented, and the steering feel of the steering wheel is prevented from getting heavy due to counter electromotive force.

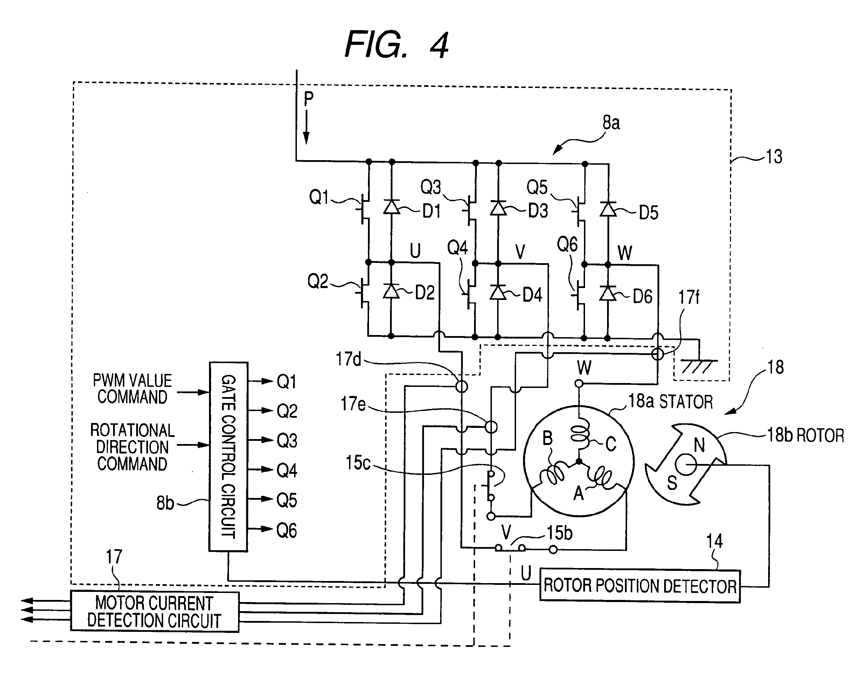

Fig. 4 is a block diagram which shows another configuration example of a brushless DC motor 18, a motor driving circuit 13 and a motor current detection circuit 17.
In the motor driving circuit 13 and the motor current detection circuit 17, in place of the current sensor 17a, a current sensor 17d is mounted between a common connection node of diodes D1, D2 and a relay contact 15b, and in place of the current sensor 17b, a current sensor 17e is mounted between diodes D3, D4 and a relay contact 15c. In addition, in place of the current sensor 17c, a current sensor 17f is mounted between a common connection node of diodes D5, D6 and the other terminal W of a coil C.

Respective detection values of the current sensors 17d, 17e, 17f are given to the motor current detection circuit 17 as respective current values of U-phase, V-phase and W-phase currents. Since the other configurations and operations are similar to the configurations and operations of the brushless DC motor 18, the motor driving circuit 13 and the motor current detection circuit 17 shown in Fig. 2, the description thereof will be omitted here.

Thus, according to the invention, since the abnormality can be determined at the point in time the balance of the summed values of the currents of three phases which flow to the motor (namely, whether or not the total sum of instantaneous currents is zero) collapses so as to detect an undercurrent abnormality which does not appear as an output torque or occurs in a certain phase, abnormality can be detected before an overcurrent flows so as to stop the driving of the motor.
Note that the invention may be properly applied to, for example, the electric power steering system described in Patent Document No. 4.

## Claims

1. An electric power steering system comprising:
a torque detector for detecting a steering torque applied to a steering member;
a steering assist brushless DC motor;
driving means for driving the motor by causing a plurality of currents to flow based on a steering torque detected by the torque detector;
a current detector for detecting each of the plurality of phase currents;
adder means for adding values of the currents detected by the current detector; and
determination means for determining whether or not a result of an addition performed by the adder means falls within a predetermined range and determining as abnormal when the result of the addition is determined to fall outside the predetermined range.

2. The electric power steering system according to claim 1, wherein when determined as abnormal, steering assistance by the motor is made to be stopped.

3. The electric power steering system according to claim 1, wherein the predetermined range is defined to be in a range which is centered at 0.
